# EUROPEAN PATENT SPECIFICATION

(11) **EP 2 100 067 B1**
(45) Date of publication and mention of the grant of the patent: **31.03.2010**
(21) Application number: 07847486.3
(22) Date of filing: 28.11.2007
(51) Int. Cl.: F16L 11/24

(54) **DUCT ELEMENT FOR AIR HANDLING SYSTEMS**
KANALELEMENT FÜR LUFTHANDHABUNGSSYSTEME
ELÉMENT DE CONDUITE FORMANT UN CANAL D'AIR POUR DES SYSTÈMES DE TRAITEMENT D'AIR

(30) Priority: 29.11.2006 HU 0600885
(43) Date of publication of application: 16.09.2009
(73) Proprietor: Polifoam Müanyagfeldolgozó Kft., 1097 Budapest (HU)
(72) Inventor: LÖRINCZ, Péter, 1126 Budapest (HU); HUJBER, János, 1214 Budapest (HU)
(74) Representative: Wübken, Ludger
(86) International application number: PCT/EP2007/062969
(87) International publication number: WO 2008/065152

(56) References cited:
- WO-A-02/10633
- US-A- 3 112 771
- US-A- 3 554 237

## Description

### Field of the invention

The invention relates to a duct element forming an air-channel for air-handling and air conditioning systems. The duct element is preferably formed from a heat insulating material as a continuous cylinder-shaped element of circular cross-section.

### Prior art

The conduits and duct elements forming the air-channel used in air-handling and in air conditioning systems are generally made of a metal plates and are provided with connecting means and branch pieces also made of a metal plates. In order to assure the appropriate heat insulation these conduits and duct elements are provided with additional insulation made of foam. This solution has, however, some disadvantages. One disadvantage is that the foam applied for additional insulation has to be cut out from different profiles and has to be manually fitted to their final joining places. After adjusting the elements made of foam the edges thereof have to be adhered together in order to form a closed insulation system. Another disadvantage is that this solution is labour-intensive and expensive, however, the end-product is aesthetically not always acceptable and the conduits and duct elements need an additional covering. A further disadvantage is that the conduits and duct elements are hardly cleanable and as such may be the source of infections.

### Disclosure of the invention

One aim of the invention is to develop an air-handling conduit or duct element preferably of circular cross-section eliminating the disadvantages of the known solutions, being easy to be assembled and being economical regarding the material utilization. A further aim of the present invention is to produce the conduits and duct elements in such a design being able to be used without any further covering, too, and eliminating the spread of infection at the same time.

It has been recognized that if the air-handling conduits and duct elements are formed by winding a heat insulating plastic band-shaped strip in spiral form, there is no need for additional covering. Using such duct elements of optional length and cross section an air-handling and air-conditioning system can be realized, the elements of which can easily be adjusted and assembled.

Central idea of the invention is a duct element made of a band-shaped strip wound in a spiral form preferably forming an air-channel for air-handling systems wherein the edge surface of one side end and the reverse edge surface of the other side end overlap each other in an overlapping area, i.e. the edges of the turns are connected together by overlapping each other.

The essence of the invention lies in that the material of the band-shaped strip forming the duct element is a chemically cross-linked polyolefin foam of closed cell-structure, and a reinforcing wire is inserted in the overlapping area.

The chemically cross-linked polyolefin foam of closed cell-structure forming the duct element has outstanding heat-insulating and sound-reducing properties.

According to a preferred embodiment of the present invention the strip forming the duct element is provided with a fire-retarding additive.

According to a further preferred embodiment of the present invention the density of the material of the strip is 30-90 kg/m³ and its thermal conductivity coefficient is 0,036-0,052 W/mK.

According to a further preferred realization of the present invention the strip is covered on one side and/or on both sides by a coating comprising a metallised layer, especially a sputtered layer, and preferably a polyolefin film layer.

According to another preferred embodiment of the present invention the width of the overlapping area is at least the triplicate of the diameter of, the reinforcing wire, or in another case the width of the overlapping area is maximum the half of the width of the strip.

### Description of a preferred embodiment of the invention

The present invention will now be appeared in more detail with the help of the enclosed figure, where

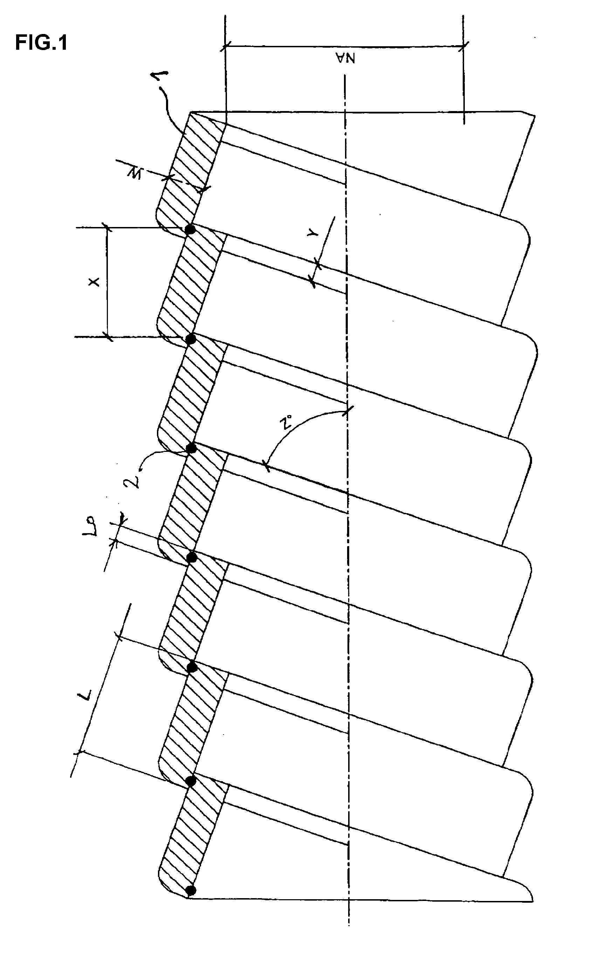

Fig. 1 shows - in a simplified manner - partly in lateral cross-section view a duct element of circular cross-section forming a preferred embodiment of the present invention.

The air-handling conduit being used as an air-transferring duct element of an air-handling system is formed from a band-shaped strip of cross-linked polyolefin foam, preferably chemically cross-linked polyethylene foam, with closed cell-structure wound in a spiral form. The edge surface of one side end and the reverse edge surface of the other side end of the strip overlap each other in an overlapping area Y thus there is an overlapping area Y between the edges of the turns. The band-shaped strip 1 is wound up in a spiral form with pitch X. Thus a duct of a continuous cylinder-shape is produced.

According to a preferred embodiment of the invention the overlapping edge (-adjacent) areas of the strip are heated prior to winding in spiral form to a temperature above 200 to 280 °C in order to bond said overlapping edge (-adjacent) surfaces by welding.

The width L and the thickness W of the strip 1 can optionally be selected on the basis of the guidance of an expert planning the air-handling regarding the area and arrangement desired to be applied. In the embodiment of the present invention the pitch angle of the turns is Z and the duct element has an inner diameter NA. In the embodiment shown in Fig. 1 a reinforcing wire 2 is inserted in the region of the overlapping area Y, said wire 2 being simultaneously wound up with the winding up of strip 1 to form the duct element.

The width Lo of the overlapping area Y practically defines the stiffness, i.e. the flexibility of the duct element. If the width Lo of the overlapping area Y is increased, the stiffness of the duct element is also increasing. The width Lo of the overlapping area Y may preferably be as high as the half of the width L of strip 1, however, the duct element will be less flexible at the same time. If the width Lo of the overlapping area Y is small, the smallest value is preferably the triple of the diameter of wire 2, the stiffness of the duct element is naturally decreasing, however, it will extremely be flexible, and thus it can either be bent in right angle.

The thickness W of strip 1 is to be chosen depending on the degree of the heat insulation desired. If the thickness W is increased the heat insulation capability of the system can significantly be increased.

The inner diameter NA of the duct element forming an air-channel is preferably selected so that it corresponds to the measure-range of the shapes and forms of the elements of the air-handling systems being available on the market. Thus the duct elements according to the present invention can be connected to the elements of the prior art systems without any modification.

The material of the duct element forming an air channel is preferably chemically cross-linked polyolefin foam of closed cell-structure. Wire 2 applied may be a kind of metal, e.g. thin steel, but it may be a plastic strip, too. Strip 1 - still before winding - can be covered by a coating comprising an metallised layer and a film layer preferably made of polyolefin, either on one side or on the other side or on both sides, i.e. in case of the duct element either outside and/or inside, if necessary. Chemically cross-linked polyolefin foam is known per se and commercially available, e.g. under the trademarks Trocellen or Polifoam. It is applied in different fields and in different colours. The duct element according to the present invention can optionally be manufactured in different colours, too, involving also the required heat- and sound-insulation. As the weight per meter of the material of the duct element is low, the duct element does not need any additional supporting element, it can easily be assembled without affecting a considerable load on the floor structure. As the material of the duct element is not a heat-conductive one, in case of delivering cold medium, the condensation of the external vapour is prevented. In case of delivering hot medium, maximally being of 90 C°, cooling down of the medium is reduced, saving energy thereby that reheating of the medium delivered is not necessary.

In an exemplary embodiment of the invention a duct element is made of chemically crosslinked PE foam with density 30 kg/m³, the thickness of the foam is 4 mm, colour anthracite. The foam is a flame retardant grade, on one side laminated with blue PE foil with thickness of 0,06 mm. On the laminated side it is embossed with a negative pyramid formed surface. The flat foam is cut into strips of 25 mm width, and rolled up cylindrically.

The strip from the roll is continuously driven to a manufacturing equipment having a shaft or mandrel system with a diameter of 120 mm. The strip is rolled up onto the shaft system in a spiral form, building an overlapping area between the two foam layers of 10 mm.

At the same place where the overlapping area is built up, a steel wire of 1 mm diameter is driven continuously between the two overlapping foam layers. At that place, where the two overlapping foam layers are connected together, and together with the wire, hot air is driven between the surfaces with app. 270 °C. A supporting cylinder is pressing the melted foam surfaces together resulting in a welding of the surfaces.

A serious problem in the air-handling systems is the unavoidable and necessary cleaning of the duct elements forming the air channels. The duct elements of the known systems are not properly and timely cleaned thus the lack of cleaning may be the origin of serious infections. A considerable advantage of the solution according to the present invention is that - as the costs of the duct elements forming the air-channel are low - instead of cleaning the duct elements the duct elements according to the present invention may simply be changed and their material can waste-free be recycled. Thus the spread of different infections can be eliminated. The strip 1 can be prepared in a bacteria-resistant version by adding suitable additives or it can be covered with a bacteria-resistant coating. The density of the material of the strip 1 should be between 30-90 kg/m³, and its thermal conductivity coefficient between 0,036-0,052 W/mK depending on the temperature of the medium to be delivered. An expert in the art can always specify the above parameters. The durability of the material is uncommon good, and the material does not comprise any waste material being the culture medium for fungi and mould.

As the duct elements according to the present invention may be produced in an attractive shape and form, it can be used without any covering in the interior design. It can further on be made in fire-retarding embodiment by adding a suitable additive or additives known by the experts in the art. Fire-retarding chemically crosslinked polyethylene foams are commercially available as Trocellen types "F" or Polifoam types "NF".

The solution according to the present invention offers new perspective in producing of air-handling systems by offering a material being easily to be worked up, recycled and enables to produce aesthetically acceptable duct elements of a given thermal conductivity coefficient, density and rigidity. The duct elements according to the present invention show excellent thermal and sound insulation properties combined with an outstanding stiffness to weight ratio and self supporting properties. In addition, the flow resistance for air being conducted through the duct elements is surprisingly low.

## Claims

1. A duct element made of a band-shaped strip (1) wound in a spiral form preferably forming an air-channel for air-handling systems wherein the edge surface of one side end and the reverse edge surface of the other side end overlap each other in an overlapping area (Y), **characterized by** that the material of the band-shaped strip (1) forming the duct element comprises a cross-linked polyolefin foam of closed cell-structure, and reinforcing means are embedded in the overlapping area (Y).

2. A duct element according to claim 1, **characterized by** that the material of the strip is chemically cross-linked polyethylene foam.

3. A duct element according to claim 1 or 2, **characterized by** that the reinforcing means comprises a wire (2).

4. A duct element according to any of claims 1-3, **characterized by** that the material of the strip comprises a fire-retarding additive.

5. A duct element according to any of claims 1-4, **characterized by** that the density of the material of the strip (1) is 30 - 90 kg/m³.

6. A duct element according to any of claims 1-5, **characterized by** that the thermal conductivity coefficient of the material of the strip (1) is 0,036 - 0,052 W/mK.

7. A duct element according to any of claims 1-6, **characterized by** that the strip (1) is covered on one side and/or on both sides by a coating comprising a metallised layer and a film layer preferably made of polyolefin.

8. A duct element according to any of claims 1-7, **characterized by** that the width (Lo) of the overlapping area (Y) is at least the triplicate of the diameter of the reinforcing wire (2).

9. A duct element according to any of claims 1-8, **characterized by** that the width (Lo) of the overlapping area (Y) is maximum the half of the width (L) of the strip (1).

10. Use of a duct according to any of claims 1-9 as a self-supporting air channel for air-handling systems.

11. Method for manufacturing a duct element according to any of claims 1-9, wherein
- a band-shaped strip of cross-linked polyolefin foam having a first edge surface on one side and a second edge surface of the reverse side is wound in spiral form on supporting means like a mandrel, whereby the edge surface of the first side and the second edge surface of the reverse side overlap each other in an overlapping area (Y),
- the first and/or the second edge surface being heated to a temperature above 200 °C during or prior to winding the band-shaped strip on the supporting means,
- a reinforcing wire is fed between the overlapping edge surfaces,
- the first and/or the second edge surface being welded together with the reinforcing wire being embedded in the overlapping area (Y).

## Patentansprüche

1. Kanalelement aus einem bandförmigen, spiralförmig gewickelten Streifen (1), insbesondere als Luftführungskanal für Lüftungssysteme, bei dem sich die randseitige Oberfläche einer Seite und die gegenüberliegende randseitige Oberfläche der anderen Seite in einer Überlappungszone (Y) überdecken, ***dadurch gekennzeichnet, dass*** das Material der bandförmigen Streifen, die das Kanalelement bilden, geschlossenzelligen vernetzten Polyolefinschaum enthält, und dass Verstärkungsmittel in die Überlappungszone (Y) eingebettet sind.

2. Kanalelement nach Anspruch 1, ***dadurch gekennzeichnet, dass*** das Material der Streifen (1) ein chemisch vernetzter Polyethylenschaum ist.

3. Kanalelement nach Anspruch 1 oder 2, ***dadurch gekennzeichnet, dass*** die Verstärkungsmittel einen Draht (2) umfassen.

4. Kanalelement nach einem der Ansprüche 1 bis 3, ***dadurch gekennzeichnet, dass*** das Material der Streifen (1) feuerhemmende Additive enthält.

5. Kanalelement nach einem der Ansprüche 1 bis 4, ***dadurch gekennzeichnet, dass*** die Dichte des Materials der Streifen (1) 30 - 90 kg/m³ beträgt.

6. Kanalelement nach einem der Ansprüche 1 bis 5, ***dadurch gekennzeichnet, dass*** der Wärmeleitkoeffizient des Materials der Streifen (1) 0,036 - 0,052 W/mK beträgt.

7. Kanalelement nach einem der Ansprüche 1 bis 6, ***dadurch gekennzeichnet, dass*** der Streifen (1) ein- oder beidseitig eine Beschichtung aufweist, die eine metallisierte Lage und eine folienförmige Lage umfasst, die vorzugsweise aus Polyolefinen besteht.

8. Kanalelement nach einem der Ansprüche 1 bis 7, ***dadurch gekennzeichnet, dass*** die Weite (LO) der Überlappungszone (Y) wenigstens dem dreifachen des Durchmessers des verstärkenden Drahtes (2) entspricht.

9. Kanalelement nach einem der Ansprüche 1 bis 8, ***dadurch gekennzeichnet, dass*** die Breite (LO) der Überlappungszone (Y) höchstens der Hälfte der Breite (L) des Streifens (1) entspricht.

10. Verwendung eines Kanalelementes nach einem der Ansprüche 1 bis 9 als selbsttragender Luftführungskanal für Lüftungssysteme.

11. Verfahren zur Herstellung eines Kanalelementes nach einem der Ansprüche 1 bis 9, bei dem
- ein bandförmiger Streifen aus vernetztem Polyolefinschaum, der eine erste randseitige Oberfläche an einer Seite und eine zweite randseitige Oberfläche an der gegenüberliegenden Seite aufweist, in Spiralform auf unterstützenden Mitteln wie einem Dorn aufgewickelt wird, wobei sich die randseitige Oberfläche der ersten Seite und die zweite randseitige Oberfläche der gegenüberliegenden Seite in einer Überlappungszone (Y) überdecken,
- die erste und/oder zweite randseitige Oberfläche vor oder beim Aufwickeln auf die unterstützenden Mittel auf eine Temperatur oberhalb von 200 °C erhitzt wird,
- ein verstärkender Draht zwischen die sich überlappenden randseitigen Oberflächen eingeführt wird,
- die erste und/oder zweite randseitige Oberfläche miteinander verschweißt werden, wobei der verstärkende Draht in die Überlappungszone (Y) eingebettet wird.

## Revendications

1. Elément de conduite constitué d'une piste en forme de bande (1) enroulée de façon hélicoïdale et formant de préférence un canal d'air pour des systèmes de traitement d'air, dans lequel la surface marginale d'une première extrémité latérale et la surface marginale opposée de l'autre extrémité latérale se chevauchent mutuellement dans une région de recouvrement (Y), **caractérisé en ce que** la matière de la piste en forme de bande (1) qui forme l'élément de conduite comprend une mousse de polyoléfine réticulée à structure à alvéoles fermées, et des moyens de renforcement sont incorporés dans la région de recouvrement (Y).

2. Elément de conduite selon la revendication 1, **caractérisé en ce que** la matière de la piste est une mousse de polyéthylène réticulée chimiquement.

3. Elément de conduite selon la revendication 1 ou 2, **caractérisé en ce que** les moyens de renforcement comprennent un fil (2).

4. Elément de conduite selon l'une quelconque des revendications 1 à 3, **caractérisé en ce que** la matière de la piste comprend un additif ignifuge.

5. Elément de conduite selon l'une quelconque des revendications 1 à 4, **caractérisé en ce que** la densité de la matière de la piste (1) est comprise entre 30 et 90 kg/m³_{.}

6. Elément de conduite selon l'une quelconque des revendications 1 à 5, **caractérisé en ce que** le coefficient de conductivité thermique de la matière de la piste (1) est compris entre 0,036 et 0,052 W/mK.

7. Elément de conduite selon l'une quelconque des revendications 1 à 6, **caractérisé en ce que** la piste (1) est couverte sur un côté et/ou sur les deux côtés par un revêtement comprenant une couche métallisée et une couche de film constituée de préférence de polyoléfine.

8. Elément de conduite selon l'une quelconque des revendications 1 à 7, **caractérisé en ce que** la largeur (Lo) de la région de recouvrement (Y) correspond au moins au triple du diamètre du fil de renforcement (2).

9. Elément de conduite selon l'une quelconque des revendications 1 à 8, **caractérisé en ce que** la largeur (Lo) de la région de recouvrement (Y) correspond au maximum à la moitié de la largeur (L) de la piste (1).

10. Utilisation d'une conduite selon l'une quelconque des revendications 1 à 9 comme canal d'air autoportant pour des systèmes de traitement d'air.

11. Procédé de fabrication d'un élément de conduite selon l'une quelconque des revendications 1 à 9, dans lequel:
- une piste en forme de bande constituée d'une mousse de polyoléfine réticulée et présentant une première surface marginale sur un premier côté et une deuxième surface marginale sur le côté opposé est enroulée de façon hélicoïdale sur des moyens de support tels qu'un mandrin, dans lequel la surface marginale du premier côté et la deuxième surface marginale du côté opposé se chevauchent mutuellement dans une région de recouvrement (Y),
- la première et/ou la deuxième surface(s) marginales(s) est (sont) chauffée(s) à une température supérieure à 200°C pendant ou avant l'enroulement de la piste en forme de bande sur les moyens de support,
- un fil de renforcement est amené entre les surfaces marginales chevauchantes, et
- la première et/ou la deuxième surface(s) marginale(s) est (sont) soudée(s) de concert avec le fil de renforcement qui est incorporée dans la région de recouvrement (Y).
